(19) Europäisches Patentamt
European Patent Office
Office européen des brevets

(11) **EP 2 112 339 A1**

(12) **EUROPÄISCHE PATENTANMELDUNG**

(43) Veröffentlichungstag:
**28.10.2009 Patentblatt 2009/44**

(51) Int Cl.:
*F01N 3/035* (2006.01)    *F01N 3/20* (2006.01)
*F01N 3/08* (2006.01)

(21) Anmeldenummer: **08007943.7**

(22) Anmeldetag: **24.04.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **Umicore AG & Co. KG**
**63457 Hanau-Wolfgang (DE)**

(72) Erfinder:
• **Eckhoff, Stephan, Dr.**
**63755 Alzenau (DE)**
• **Spurk, Paul, Dr.**
**64331 Weiterstadt (DE)**
• **Mußmann, Lothar, Dr.**
**63069 Offenbach (DE)**
• **Müller, Wilfried, Dipl.-Ing.**
**61184 Karben (DE)**

(54) **Verfahren und Vorrichtung zur Reinigung von Abgasen eines Verbrennungsmotors**

(57)  Die vorliegende Erfindung betrifft ein Verfahren zur Reinigung von $NO_x$-enthaltenden Abgasen, die in einem Verbrennungsmotor entstehen. Insbesondere richtet sich die Erfindung auf die Reinigung von Abgasen eines Motors, welcher ein mageres Abgas produziert, z.B. ein Dieselmotor oder ein mager betriebener Ottomotor. Weiterhin betrifft die vorliegende Erfindung eine entsprechend ausgestattete Abgasreinigungsvorrichtung.

Die Vorrichtung schlägt eine Reihenfolge an verschiedenen Katalysatoren zur Reinigung des Primärabgases von Magermotoren vor, bei dem ein oxidativ wirkender Partikelfilter gefolgt wird von einem Oxidationskatalysator und dieser wiederum von einem SCR-Katalysator, wobei letzterer einer abströmseitig zum Oxidationskatalysator liegender Reduktionsmittelzufügung nachgeschaltet ist.

**Figur 3**

**Beschreibung**

Die vorliegende Erfindung betrifft ein Verfahren zur Reinigung von $NO_x$-enthaltenden Abgasen eines Verbrennungsprozesses. Insbesondere richtet sich die Erfindung auf die Reinigung von Abgasen eines Motors, welcher ein mageres Abgas produziert, z.B. einen Dieselmotor oder einen mager betriebener Ottomotor. Weiterhin betrifft die vorliegende Erfindung eine für die Durchführung des erfindungsgemäßen Verfahrens ausgestattete Abgasreinigungsvorrichtung.

Die im Abgas eines Kraftfahrzeugs enthaltenen Emissionen können in zwei Gruppen unterschieden werden. So bezeichnet der Begriff Primäremission Schadgase, die durch den Verbrennungsprozess des Kraftstoffes im Motor direkt entstehen und im sogenannten Rohabgas am Zylinderaustritt vorhanden sind. Als Sekundäremission werden Schadgase bezeichnet, die als Nebenprodukte in der Abgasreinigungsanlage entstehen können. Das Rohabgas von Magermotoren enthält neben den üblichen Primäremissionen Kohlenmonoxid (CO), Kohlenwasserstoffe (HC) und Stickoxide ($NO_x$) einen relativ hohen Sauerstoffgehalt von bis zu 15 Vol.-%. Außerdem können noch Partikelemissionen hinzukommen, die überwiegend aus Rußrückständen und gegebenenfalls organischen Agglomeraten bestehen und aus einer partiell unvollständigen Kraftstoffverbrennung im Zylinder herrühren.

Die Einhaltung künftig in Europa, Nordamerika und Japan geltender gesetzlicher Abgasgrenzwerte für Fahrzeuge erfordert neben der Entfernung von Partikeln auch eine effektive Entfernung von Stickoxiden aus dem Abgas ("Entstickung"). Die Schadgase Kohlenmonoxid und Kohlenwasserstoffe können aus dem mageren Abgas durch Oxidation an einem geeigneten Oxidationskatalysator leicht unschädlich gemacht werden. Zur Entfernung der Partikelemissionen sind Partikelfilter mit und ohne zusätzliche katalytisch aktive Beschichtung geeignete Aggregate. Die Reduktion der Stickoxide zu Stickstoff ist wegen des hohen Sauerstoffgehaltes im Abgas von mager betriebenen Verbrennungsmotoren schwieriger. Bekannte Verfahren beruhen entweder auf dem Einsatz von Stickoxid-Speicherkatalysatoren (NO_x Storage Catalyst NSC) oder sind Verfahren zur selektiven katalytischen Reduktion (Selective Catalytic Reduktion SCR), meist mittels Ammoniak als Reduktionsmittel, an einem geeigneten Katalysator, kurz SCR-Katalysator. Es sind auch Kombinationen dieser Verfahren bekannt, worin beispielsweise an einem vorgeschalteten Stickoxid-Speicherkatalysator unter fetten Betriebsbedingungen Ammoniak als Sekundäremission erzeugt wird, der in einem abströmseitig angeordneten SCR-Katalysator zunächst gespeichert und in einer sich anschließenden mageren Betriebsphase zur Reduktion von den Stickoxid-Speicherkatalysator passierenden Stickoxiden genutzt wird. Die DE 102007060623 beschreibt eine Reihe von im Stand der Technik vorhandenen Varianten an Abgasreinigungssystemen mit Entstickungseinrichtungen.

Der Einsatz solcher "passiver" Verfahren zur Entstickung von Magermotorenabgasen ist vor allem dadurch begrenzt, dass die Darstellung fetter Betriebsphasen insbesondere bei Dieselmotoren nicht ohne weiteres möglich ist. Somit gelingt sowohl die Regeneration von Stickoxid-Speicherkatalysatoren (Desorption bei gleichzeitiger Reduktion der desorbierten Stickoxide zu Stickstoff) als auch die bedarfsgerechte Erzeugung von internem Reduktionsmittel ($NH_3$, ggf. auch HC oder CO), das ein SCR-Katalysator zur Umsetzung von $NO_x$ benötigt, nur mit Hilfsmaßnahmen wie beispielsweise der Kraftstoffnacheinspritzung in den Abgasstrang oder in den Zylinder während des Auslasskolbenhubs. Solche Hilfsmaßnahmen führen zu einem unerwünschten Kraftstoff-mehrverbrauch und erschweren darüber hinaus die Einhaltung der gesetzlichen Grenzwerte für CO und HC.

Demzufolge gilt für die Entstickung von Magermotorenabgasen gegenwärtig das "aktive" SCR-Verfahren als bevorzugtes Verfahren. Hierbei erfolgt die Verminderung der im Abgas enthaltenen Stickoxide unter Zuhilfenahme eines aus einer externen Quelle in den Abgasstrang eindosierten Reduktionsmittels. Als Reduktionsmittel wird bevorzugt Ammoniak oder eine zu Ammoniak zersetzliche Verbindung wie Harnstoff oder Ammoniumcarbamat eingesetzt. Das gegebenenfalls aus der Vorläuferverbindung in situ erzeugte Ammoniak reagiert am SCR-Katalysator mit den Stickoxiden aus dem Abgas in einer Komproportionierungsreaktion zu Stickstoff.

Es ist bekannt, dass die Effizienz des SCR-Katalysators mit zunehmender Reduktionsmittelmenge ansteigt. Allerdings steigt mit zunehmendem $NH_3$-Gehalt auch die Gefahr eines $NH_3$-Durchbruchs am SCR-Katalysator.

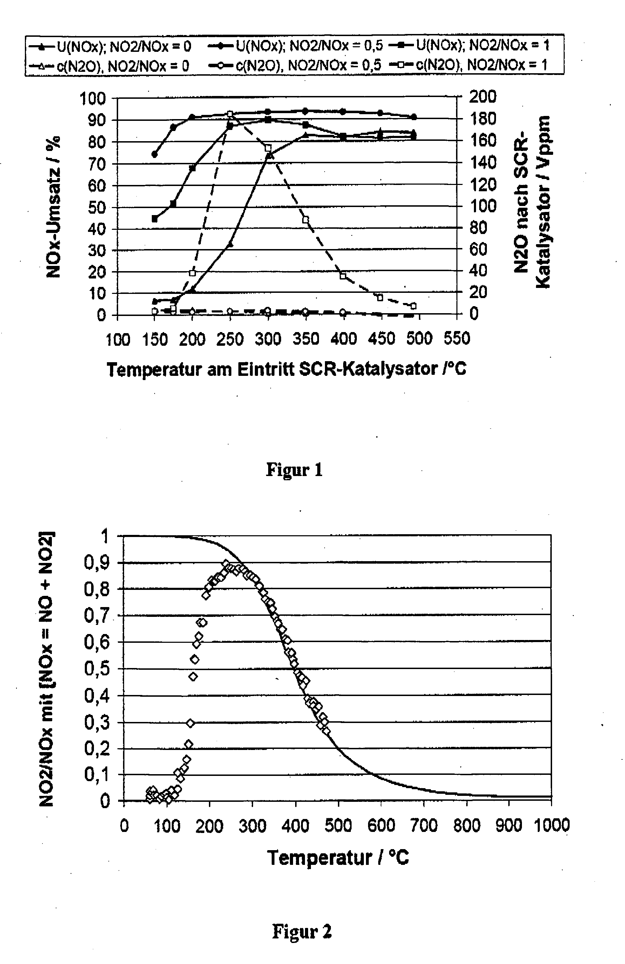

Weiterhin werden optimale Stickoxid-Umsätze nur erzielt, wenn ein molares Verhältnis von Stickstoffmonoxid zu Stickstoffdioxid vorliegt ($NO/NO_2$ = 1) bzw. das Verhältnis $NO_2/NO_x$ = 0,5 ist (G. Tuenter et al., Ind. Eng. Chem. Prod. Res. Dev. 1986, 25, 633-636; Fig. 1). Figur 1 zeigt beispielhaft Modellgasergebnisse eines konventionellen SCR-Katalysator auf der Basis eines Eisen-ausgetauschten Zeolithen die Abhängigkeit des Stickoxid-Umsatzes und der Selektivität der Umsetzung vom $NO_2/NO_x$-Verhältnis bei $NO_x/NH_3$ = 0,9. Es ist deutlich zu erkennen, dass nur bei einem $NO_2/NO_x$-Verhältnis von 0,5 über den gesamten Temperaturbereich von 200 bis 500°C Stickoxid-Umätze von etwa 90 % erzielt werden. Der größte Einfluss des $NO_2/NO_x$-Verhältnisses ist im Tieftemperaturbereich bis 250°C zu beobachten. Liegt kein oder nur wenig $NO_2$ im dosierten Prüfgas vor, wie es meist im Rohabgas der Fall ist, so werden unterhalb von 200°C praktisch keine Umsätze beobachtet. Besteht $NO_x$ dagegen vollständig aus $NO_2$, so werden bei 250°C zwar auch hohe Umsätze erreicht. Allerdings zeigt die Analyse des Abgases nach Katalysator, dass die Reduktion von wesentlichen Mengen $NO_2$ nicht zu unschädlichem Stickstoff, sondern zum Reizgas $N_2O$ führt. Optimale Umsätze beginnend mit 75% Konvertierung bereits bei 150°C bei gleichzeitig optimaler Selektivität zu Stickstoff werden gemäß der Stöchiometrie der Reaktionsgleichung

$$2\,NH_3 + NO + NO_2 \;\rightarrow\; 2\,N_2 + 3\,H_2O$$

nur mit einem $NO_2/NO_x$-Verhältnis von 0,5 erzielt. Dies gilt nicht nur für SCR-Katalysatoren auf der Basis von Eisen-ausgetauschten Zeolithen, sondern für alle gängigen, d.h. kommerziell erhältlichen SCR-Katalysatoren. Im Primärabgas von Magermotoren befinden sich wie gesagt jedoch nur geringe Mengen an $NO_2$. Das Verhältnis an $NO_2$ zu Gesamt-$NO_x$ ist hier wesentlich kleiner als 0,5.

Derzeit ist, um den aufkommenden gesetzlichen Vorgaben gerecht zu werden, eine Kombination der verschiedenen Abgasreinigungsaggregate unumgänglich. Eine Vorrichtung zur Reinigung von Magermotorenabgasen sollte daher einen oxidationsaktiven Katalysator und zur Entstickung einen SCR-Katalysator mit vorgeschalteter Dosierungseinrichtung für Reduktionsmittel (bevorzugt Ammoniak oder Harnstofflösung) und externer Reduktionsmittelquelle (beispielsweise einen Zusatztank mit entsprechenden wässrigen Lösungen) enthalten. Falls es durch Optimierung der motorischen Verbrennung nicht gelingt, die Partikelemissionen so gering zu halten, dass diese über dem Oxidationskatalysator durch direkte Oxidation mit Sauerstoff entfernt werden können, kann sich zusätzlich der Einsatz eines Partikelfilters anbieten.

Die EP1054722 beschreibt ein System zur Behandlung von $NO_x$- und partikelhaltigen mageren Abgasen eines Verbrennungsmotors, worin ein Oxidationskatalysator einem Partikelfilter vorgeschaltet ist. Abströmseitig zum Partikelfilter sind eine Reduktionsmittelquelle und eine Dosiereinrichtung für das Reduktionsmittel, sowie ein SCR-Katalysator angeordnet. Im hier beschriebenen Verfahren wird der $NO_2$-Anteil im Abgas und somit das $NO_2/O_x$-Verhältnis durch wenigstens teilweise Oxidation von NO am Oxidationskatalysator erhöht, wobei das $NO/NO_2$-Verhältnis bevorzugt auf "ein vorbestimmtes, für den SCR-Katalysator optimales Niveau eingestellt wird" (vgl. Anspruch 12 der Patentschrift). Dieses angesprochene optimale Niveau wird im hier beschriebenen Verfahren jedoch nur unzureichend erreicht.

Insbesondere wird die Konvertierungsrate von NO zu $NO_2$ vor dem SCR-Katalysator bestimmt durch die Art des oxidativ wirkenden Katalysators selbst, seinen Alterungszustand, die Abgastemperatur und den Sauerstoffpartialdruck in der Rohemission. Die beiden letzten Parameter bestimmen die Gleichgewichtslage der Oxidationsreaktion und somit das maximal bildbare $NO_2/NO_x$-Verhältnis. Zusammensetzung und Alterungszustand des Oxidationskatalysators bestimmen die Mindestabgastemperatur, bei der die für die Oxidationsreaktion erforderliche Aktivierungsenergie mit Hilfe des Katalysators überwunden wird und der Katalysator "zündet"; die sogenannte Light-Off-Temperatur des Katalysators. Figur 2 zeigt beispielhaft den Zusammenhang zwischen Abgastemperatur und dem an einem konventionellen, platinhaltigen Oxidationskatalysator in einen Modellgas eingestellten $NO_2/NO_x$-Verhältnis bei einem Sauerstoffgehalt von 6 Vol.-%. Die durchgezogene Linie zeigt die Gleichgewichtslage der Oxidationsreaktion in Abhängigkeit von der Temperatur. Bei tiefen Temperaturen bis kurz unterhalb von 200°C liegt das Gleichgewicht vollständig auf der Seite der $NO_2$-Bildung. Oberhalb von 700°C ist $NO_2$ nicht mehr stabil, es liegt nur noch NO vor. Der Wert $NO_2/NO_x$ = 0,5 wird bei etwa 400°C durchschritten. Die durch Messpunkte dargestellte Kurve zeigt die tatsächlich eingestellten molaren $NO_2/NO_x$-Verhältnisse über einem frisch hergestellten, konventionellen, Platin-haltigen Oxidationskatalysator in einem Komponenten-reduzierten

Modellgas. Der Katalysator "zündet" erst bei ca. 140°C. Die $NO_2$-Bildungsrate steigt dann mit zunehmender Temperatur stark an, bis bei ca. 280°C die Gleichgewichtslinie erreicht wird. Werte für ein $NO_2/NO_x$-Verhältnis von 0,5 werden ab ca. 160°C erreicht und praktisch sofort überschritten. Thermische Alterung des Katalysators und die Anwesenheit anderer oxidierbarer Abgaskomponenten führen zu einem Anstieg der NO-Light-Off-Temperatur bei gleichzeitiger Abnahme der Oxidationsaktivität. Die Einstellung der Gleichgewichtskurve wird mit zunehmender Alterung erst bei immer höher werdenden Abgastemperaturen erreicht. Bei starker Alterung des Katalysators sind Konvertierungsraten von 50 % in der NO-Oxidation und somit $NO_2/NO_x$-Verhältnisse von 0,5 unter Umständen nicht mehr zu beobachten. Figur 2 macht damit deutlich, wie schwierig die Gewährleistung eines optimalen $NO_2/NO_x$-Verhältnisses ist, wenn die Einstellung rein "passiv" über einen nicht weiter geregelten Oxidationskatalysator erfolgt.

Die Abgasreinigungssysteme für Motorenabgase haben gemeinsam, dass die Abgasreinigungsaggregate sowohl thermisch als auch chemisch, d.h. bezogen auf die Zusammensetzung des Abgases, aneinander und an den jeweiligen Betriebszustand des Motors gekoppelt sind. Durch den Betriebszustand des Motors wird sowohl die Zusammensetzung des Rohabgases und somit die Menge der im Abgas verfügbaren Oxidations- und Reduktionsmittel festgelegt, als auch die Temperatur der nachgeordneten Katalysatoren wesentlich bestimmt. Die Effizienz der Abgasreinigungsaggregate selbst hängt damit maßgeblich vom ständig wechselnden Betriebspunkt des Motors ab. Weitere Einflussgrößen für das $NO_2/NO_x$-Verhältnis ergeben sich, wenn das Abgasreinigungssystem wie in EP-B-1054722 zusätzlich zwischen Oxidationskatalysator und SCR-Stufe Abgasreinigungsaggregate, beispielsweise einen Partikelfilter, enthält. In diesem Fall wird $NO_2$ beim Durchgang des Abgases durch den Partikelfilter verbraucht, wenn der Filter wenigstens teilweise rußbeladen ist. Das starke Oxidationsmittel $NO_2$ reagiert dann mit Ruß unter Bildung von CO oder $CO_2$ und

NO, so dass sich das $NO_2/NO_x$-Verhältnis wieder verringert. Dieser Vorgang wird vom Fachmann auch als "CRT-Effekt" (CRT® = Continuous Regenerating Trap) bezeichnet. Wie stark sich das $NO_2/NO_x$-Verhältnis verringert, hängt vom Beladungszustand des Partikelfilters, dem $NO_2$-Gehalt des Abgases und der Abgastemperatur ab. In einer solchen Systemanordnung kann eine bedarfs-gerechte $NO_2$-Versorgung der SCR-Stufe nicht mehr für alle Betriebspunkte des Motors und über die gesamte Betriebsdauer des Kraftfahrzeugs gewährleistet werden.

Zusammenfassend lässt sich sagen, dass die Konzentration des $NO_2$ im Abgas in den Systemen des Standes der Technik (z.B. EP-B-1054722) u.a. von der variablen Partikelbeladung des Partikelfilters, vom Betriebspunkt des Motors, der Abgastemperatur und Zusammensetzung des Rohabgases abhängt und weiterhin beeinflusst wird durch Geometrie, Art, Anzahl und Aktivität der der SCR-Stufe anströmseitig vorgeschalteten Abgasreinigungsaggregate. Aufgrund der vielen Einflussgrößen können über das gesamte Fahrspektrum hinweg daher bei einer festgelegten Auslegung der mitwirkenden Komponenten nur verhältnismäßig selten so optimale Bedingungen vorherrschen, dass vor dem SCR-Katalysator das oben angesprochene bevorzugte $NO_2/NO_x$-Verhältnis von 0,5 vorliegt.

Zudem steht zu erwarten, dass zukünftige Motorenkonzepte auf niedrigeren Kraftstoffverbrauch hin optimiert werden. Das bedeutet, dass sich der Wirkungsgrad der Motoren weiter verbessern wird, was zur Folge hat, dass sich die durchschnittlichen Abgastemperaturen sowohl beim Diesel- als auch bei mager betriebenen Ottomotoren weiter erniedrigen. Wie in Figur 1 gezeigt, wird die $NO_x$-Umsatzrate des SCR-Katalysators bei niedrigen Abgastemperaturen zwischen 150 und 300°C maßgeblich durch das

$NO_2/NO_x$-Verhältnis bestimmt.

Aufgabe der vorliegenden Erfindung war daher die Angabe eines Verfahrens und einer Abgasreinigungsvorrichtung, welche die eben im Stand der Technik skizzierten nachteiligen Einflüsse überwinden hilft. Dabei sollte das vorgeschlagene Verfahren bzw. die angesprochene Vorrichtung in den anderen relevanten Eigenschaften den Verfahren und Vorrichtungen des Standes der Technik zumindest nicht wesentlich unterlegen sein. Insbesondere sollte es mit dem erfindungsgemäßen Verfahren und der Vorrichtung möglich sein, bei weiterhin guten Werten für den Partikel- bzw. HC- und CO- einen wesentlich verringerten $NO_x$-Ausstoß über einen größeren Bereich des Fahrspektrums hinweg zu garantieren und damit den Gesamtausstoß an Schadstoffen zu verringern.

Diese und weitere nicht näher genannte sich jedoch aus dem Stand der Technik in naheliegender Weise ergebenden Aufgaben werden durch ein mit den Merkmalen des gegenständlichen Anspruchs 1 beschriebenes Verfahren bzw. die Anwendung einer Vorrichtung mit den Merkmalen des Anspruchs 13 gelöst.

Dadurch, dass man in einem Verfahren zur Reinigung von $NO_x$-enthaltenden Abgasen eines Verbrennungsprozesses, diese mit den folgenden Vorrichtungen in der angegebenen Reihenfolge behandelt:

a) mit einem oxidativ wirkenden Partikelfilter (1),
b) mit einem Oxidationskatalysator (2) und
c) nach Zufügen einer ausreichenden Menge eines Reduktionsmittels über eine Dosiervorrichtung (3b) aus einer Reduktionsmittelquelle (3a) mit einem SCR-Katalysator (3c),
gelangt man völlig überraschend und in sehr einfacher dafür aber nicht minder naheliegender Art und Weise zur Lösung der gestellten Aufgabe. Durch die einfache Änderung der Anordnung der Reinigungsaggregate (1) und (2) gegenüber dem Stand der Technik wird der Einfluss der Änderung des $NO_2/NO_x$-Verhältnisses durch den Russbeladungsgrad des Partikelfilters (1) ausgeschlossen. Der dem Partikelfilter (1) nachfolgende Oxidationskatalysator (2) garantiert unabhängig vom Beladungsgrad des Partikelfilter (1) über weite Bereiche hinweg ein nahezu optimales Verhältnis von $NO_2/NO_x$ vor dem SCR-Katalysator, was im Hinblick auf den $NO_x$-Ausstoß besonderes vorteilhaft erscheint. Die Anordnung des Oxidationskatalysators (2) hinter dem Partikelfilter (1) birgt ferner den Vorteil, dass anorganische Vergiftungselemente, wie beispielsweise Ölascheadditive, sich bereits im vorgeschalteten Partikelfilter (1) abscheiden und den nachgeschalteten Oxidationskatalysator (1) nicht in seiner Aktivität beeinträchtigen. Trotz der Umsortierung der eingesetzten Vorrichtungen im Vergleich zum Vorschlag des Standes der Technik (insbes. EP-B-1054722) ergeben sich für die Produktion der anderen relevanten Schadstoffe zumindest keine wesentlichen Verschlechterungen.

Wie angedeutet stammen die zu reinigenden Abgase aus einem Verbrennungsprozess. Der Fachmann ist sich bewusst, welche Verbrennungsprozesse hier in Frage kommen können. Beispielhaft seinen Prozesse zur Verhüttung, Müllverbrennung, Kohleverbrennung, etc. erwähnt. Vorteilhafterweise kommt das erfindungsgemäße Verfahren jedoch zur Reinigung von Autoabgasen in Betracht. Hier ist insbesondere die Reinigung von Abgasen eines Verbrennungsprozess in einem Magermotor gemeint. Ein Magermotor ist ein Verbrennungsmotor, dessen Luft/Kraftstoff-Gemisch im mageren Bereich gehalten wird, insbesondere ein Dieselmotor oder ein mager betriebener Ottomotoren mit Benzindirekteinspritzung. Mager bedeutet, dass mehr Verbrennungsluft vorhanden ist, als für die stöchiometrische Verbrennung des Kraftstoffes im Zylinder benötigt wird. Der Luftüberschuss führt dazu, dass die Verbrennungstemperatur und auf diese Weise die Konzentration von Stickoxiden im Abgas reduziert wird. Das Verbrennungsluftverhältnis λ (lambda) ist eine Zahl, mit der die Gemischzusammensetzung bestehend aus Luft und Kraftstoff beschrieben wird. Das Verbrennungsluftverhältnis setzt die tatsächlich für eine Verbrennung zur Verfügung stehende Luftmasse ins Verhältnis zur mindestens notwendigen stöchiometrischen Luftmasse, die für eine vollständige Verbrennung benötigt wird. Magermotoren nennt man Motoren, die zeitweise oder überwiegend im $\lambda$-Bereich > 1 betrieben werden. Insbesondere der Dieselmotor ist ein klassisches Magerkonzept, der mit einem Luftüberschuss (1,3 < $\lambda$ < 2,2) betrieben wird. Herkömmliche Ottomotoren werden bei einem Luftverhältnis um $\lambda$ = 1 betrieben. Eine Lambdasonde vor dem Katalysator misst den Sauerstoffgehalt im Abgas und gibt Signale zur Steuerung der Luftzufuhr an die Steuereinheit des Autos weiter. Moderne Ottomotorenkonzepte, wie beispielsweise die Benzindirekteinspritzung, ermöglichen über weite Lastbereiche hinweg eine magere Betriebsweise, was mit einem Kraftstoffverbrauchsvorteil gegenüber stöchiometrischen Konzepten verbunden ist.

Für die vorliegende Erfindung kann jedweder oxidativ wirkende Partikelfilter (1), der dem Fachmann für das vorliegende Verfahren als geeignet erscheint, herangezogen werden. In der Regel sind die Filter so aufgebaut wie in der WO0102083 unter der Rubrik "Downstream Filter" beschrieben. Weitere mögliche Ausgestaltungen der Partikelfilter sind in der WO2006021336 erwähnt. Unter der oxidativen Wirkung des Partikelfilters (1) wird verstanden, dass die den Partikelfilter durchströmenden oxidierbaren Bestandteile des Abgases in Gegenwart des vorhandenen Sauerstoffs oxidiert werden. Damit werden sowohl Kohlenwasserstoffe und Kohlenmonoxid als auch vorhandenes NO zumindest teilweise zu $CO_2$, $H_2O$ bzw. $NO_2$ umgesetzt. Der oxidativ wirkende Partikelfilter (1) hat primär die Aufgabe, größere und kleinere Rußpartikel aus dem Abgas herauszufiltern. Zu gegebener Zeit muss daher der Filter von den Rußpartikeln befreit werden, um nicht zu verstopfen. Dies geschieht durch Oxidation der im Filter gesammelten Rußpartikel mit dem vorhandenen Sauerstoff oder durch vom oxidativ wirkenden Filter (1) selbst gebildetes $NO_2$ (CRT[®]-Effekt) im Abgas. Die beschriebene Oxidation der Partikel im Partikelfilter (1) kann somit kontinuierlich (z.B. über den bereits beschriebenen CRT[®]-Effekt) oder diskontinuierlich durch Anheben der Abgastemperatur erfolgen. Temperaturen, die zum schnellen Russabbrand des im Partikelfilter gesammelten Rußes führen, auch Regeneration des Partikelfilters genannt, liegen normalerweise um 600°C. Diese hohen Temperaturen werden gewöhnlich nur durch zusätzliche Heizmaßnahmen erreicht, wie z.B. durch Kraftstoffnacheinspritzung, was eine Erhöhung des Kraftstoffverbrauches mit sich bringt. Je näher der Partikelfilter (1) am Motorraum angeordnet wird, desto höher ist die mittlere Temperatur der Abgase und umso leichter kann die zum Russabbrand benötigte Temperatur erreicht werden.

Die Oxidation dieser Rußpartikel erfolgt weiterhin erleichtert, da der Filter (1) selbst oxidative Wirkung aufweist. Dies kann dadurch bewerkstelligt werden, dass dieser katalytisch aktive Komponenten enthält. Diese können sich im Filter als auch auf der Filteroberfläche befinden. Vorteilhaft ist die Ausgestaltung, bei der der wie oben angesprochene Partikelfilter (1) zusätzlich mit einem oxidativ wirkenden Katalysator beschichtet ist. Dies senkt einerseits die Light-Off-Temperatur zur Verbrennung des Rußes auf dem beschichteten Filter, zum anderen kann sich dann der gewünschte CRT[®]-Effekt vorteilhaft entfalten.

Als katalytisch aktive Komponenten oder Beschichtungen kommen für den Fachmann z.B. solche in Frage, die in der Lit. PCT/EP2008/000631 oder in der Doktorarbeit von Stephan Liebsch, TU Dresden 2004 dargestellt sind. Bevorzugt weist der Partikelfilter (1) und insbesondere die angesprochene Beschichtung Metalle wie Platin, Palladium, Rhodium oder Mischungen derselben auf, wobei diese dann vorteilhaft auf hochoberflächigen Trägermaterialien aufgebracht sind. Mehr bevorzugt werden Platin-Palladium-Gemische eingesetzt. Ggf. abhängig vom Anteil an oxidierend wirkenden Spezies im Abgas und dem einzuhaltenden Temperaturregime wählt der Fachmann das geeignete Mischungsverhältnis der Metalle aus. Die oxidativ wirkende Beschichtung bzw. der Partikelfilter (1) kann vorzugsweise ein Molverhältnis von Platin zu Palladium zwischen 15 : 1 und 1 : 3, insbesondere zwischen 15 : 1 und 5 : 1 aufweisen.

Insbesondere bei mager betriebenen Ottomotoren mag es auch sinnvoll erscheinen, als katalytisch aktive Beschichtungen sogenannte Katalysatoren mit 3-Wege-Funktion aufzubringen, die sowohl unter mageren als auch stöchiometrischen Abgasbedingungen hohe Umsatzraten für Kohlenwasserstoffe, Kohlenmonoxid und Stickoxide aufweisen. Die Funktionsweise und geeignete Ausgestaltung von 3-Wege-Katalysatoren ist beispielsweise in EP 1 046 423 und WO95/35152 ausführlich beschrieben.

Der Oxidationskatalysator (2) kann ebenfalls nach Maßgabe des Fachmannes ausgestaltet sein. Geeignete Ausführungen können den Anmeldungen DE10308288, DE19614540, DE19753738, DE3940758, EP427970, DE 4435073 entnommen werden. Einsetzbar sind z.B. gängige Oxidationskatalysatoren (2) mit einer oxidativ wirkenden Katalysatorbeschichtung auf einem Trägermaterial. Der Oxidationskatalysator (2) und insbesondere dessen Katalysatorbeschichtung weist vorzugsweise Metalle der Gruppe bestehend aus Platin, Palladium, Rhodium und Mischungen derselben auf. Als geeignet haben sich z.B. Platin bzw. Platin-Palladium-Gemische erwiesen. Der Oxidationskatalysator (2) und insbesondere die Katalysatorbeschichtung kann vorzugsweise ein Molverhältnis von Platin zu Palladium zwischen 15 : 1 und 1 : 3, insbesondere zwischen 15 : 1 und 5 : 1 aufweisen. Beispiele für oxidativ wirkende Katalysatorbeschichtungen finden sich auch in den oben genannten Patentanmeldungen.

Im Hinblick auf geeignet einzusetzendes Trägermaterial für den genannten Partikel- (1) bzw. Oxidationskatalysator (2) sei auf die EP 0800856 verwiesen. Dort und in den dort zitierten Schriften werden ebenfalls geeignete Träger beschrieben. Der dort beschriebene Träger enthält ein Zeolithgemisch aus mehreren Zeolithen mit unterschiedlichen Modulen und Platingruppenmetallen sowie weitere Metalloxide aus der Gruppe Aluminiumsilikat, Aluminiumoxid und Titanoxid, wobei das Aluminiumsilikat ein Gewichtsverhältnis Siliziumdioxid/Aluminiumoxid von 0,005 bis 1, vorzugsweise 0,01 bis 0,5, besonders bevorzugt 0,05 bis 0,1, aufweist, wobei die Platingruppenmetalle vorteilhafter Weise nur auf den weiteren Metalloxiden abgeschieden sein können. In einer bevorzugten Ausführungsform enthält der Katalysator Platin auf einem Aluminiumsilikat sowie bis zu fünf verschiedene Zeolithe. Die Zeolithe können ausgewählt werden aus der Gruppe bestehend aus Mordenit, H-ZSM5, Na-ZSM5, Y-Zeolith, dealuminierter Y-Zeolith (DAY) und β-Zeolith. Die Konzentration der Platingruppenmetalle auf den oxidischen Trägermaterialien kann hier zwischen 0,1 und 5 Gew.-% bezogen auf das Trägermaterial liegen. Bevorzugt ist ein Bereich von 0,5 - 4 Gew.-% und besonders bevorzugt 1,5 - 3,8 Gew.-%.

Ein weiteres Beispiel in diesen Zusammenhang ist die US 6,767,855. Dort und in den zitierten Schriften werden ein- und mehrschichtige Katalysatoren, die als Kohlenwasserstoffe adsorbierendes Material Zeolithe enthalten sowie katalytisch aktive Edelmetalle der Platingruppe (Platin, Palladium, Rhodium, Iridium und Ruthenium), die bevorzugt auf Aluminiumoxid abgeschieden sind, beschrieben. Die Kohlenwasserstoff adsorbierenden Zeolithe sind bevorzugt in einer separaten Schicht angeordnet, die direkt auf einem Tragkörper aufgebracht ist. Die Zeolithe können mit Edelmetallen wie Palladium oder Silber beschichtet sein. Die weiteren Katalysatorschichten sind auf dieser adsorbierenden Schicht aufgebracht und können neben dem mit den Platingruppenmetallen aktivierten Aluminiumoxid noch ein Cer enthaltendes Oxid aufweisen. Die US6,756,336 beschreibt ebenso wie die US6,767,855 erfindungsgemäß geeignete ein-und mehrschichtige Katalysatoren mit Zeolithen als Kohlewasserstoffe adsorbierende Materialien.

In einer weiteren Ausführungsform der Erfindung kann die katalytische Beschichtung des Partikelfilter (1) bzw. des Oxidationskatalysators (2) auch eine Funktion zur Einspeicherung von Stickoxiden unter mageren Abgasbedingungen aufweisen. Der Vorteil einer solchen $NO_x$-Einspeicherfunktion in einer dieser beiden Bauteile oder in beiden Bauteilen ist, dass die im Abgas enthaltenen Stickoxide bereits bei niedrigen Abgastemperaturen, bei denen der nachgeschaltete SCR-Katalysator noch nicht aktiv ist, herausgefiltert werden können und bei höheren Temperaturen, bei denen der SCR-Betrieb möglich ist, von den Einspeicherzentren desorbiert und an dem nachgeschalteten SCR-System umgesetzt werden können (wie in WO2004076829 beschrieben). Zur Speicherung der Stickoxide als Nitrate dienen basische Oxide, Karbonate oder Hydroxide von Alkalimetallen, Erdalkalimetallen und Seltenerdmetallen, insbesondere basische Verbindungen des Bariums und Strontiums sowie des Cers. Bevorzugt weist der $NO_x$-Speicher die Komponenten ausgewählt aus den Oxiden des Cers, Bariums oder Strontiums oder Mischungen derselben auf.

Nachdem das Abgas mit dem Oxidationskatalysator (2) behandelt worden ist, liegt ein von den Eigenschaften des Partikelfilters (1) unabhängiges Verhältnis von $NO_2/NO_x$ im Abgas vor. Damit fällt eine wesentliche Einflussquelle auf das $NO_2/NO_x$-Verhältnis weg, womit sich erstaunlicherweise die Möglichkeit ergibt, dieses Verhältnis besser in bevorzugten Bahnen halten zu können. Eine wesentliche weitere Steuergröße für das angesprochene $NO_2/NO_x$-Verhältnis ist neben der Temperatur bei der Oxidation der Abgase über dem Oxidationskatalysator (2), bei der neben NO zu $NO_2$ auch CO und HC-Komponenten zu $CO_2$ und $H_2O$ oxidiert werden, der Sauerstoffgehalt des Abgases. Dieser Parameter kann ggf. gezielt durch die elektronisch gesteuerte Motorsteuerung vorgegeben werden. So ist es in einem Regelkreis möglich, abhängig von der Temperatur, die am Oxidationskatalysator (2) existiert, den Sauerstoffgehalt im Abgas einzustellen. Bevorzugt wird daher die Menge an vorhandenem Sauerstoff im Abgas so geregelt, dass das $NO_2/NO_x$-Molverhältnis vor dem SCR-Katalysator (3c) möglichst unabhängig von der Temperatur des Oxidationskatalysators (2) auf Werte um 0,3 bis 0,7 angehoben wird. Besonders bevorzugt wird ein Intervall von ca. 0,4 bis 0,6, ganz besonders bevorzugt ein Wert von ca. 0,45 bis 0,55 eingestellt.

Um die Temperaturabhängigkeit in diesem Bereich weiter zu minimieren, kann es sinnvoll sein, den Oxidationskatalysator (2) zu temperieren, damit über verschiedene Betriebspunkte des Motors hinweg eine einheitliche Temperatur eingestellt werden kann, was wiederum zu einem einheitlicheren und damit besser reduzierbaren

$NO_2/NO_x$-Verhältnis führt. Vorzugsweise liegt die eingestellte Temperatur im Oxidationskatalysator (2) bei 200°C - 500°C, weiter vorzugsweise 250 - 400 °C und besonders bevorzugt bei 300° C- 350°C. Die Temperierung kann nach dem Fachmann bekannter Maßgabe erfolgen, beispielsweise durch motortechnische Maßnahmen wie Nacheinspritzung und Androsselung zum Heizen bzw. Entdrosselung und erhöhte Abgasrückführung zum Kühlen sowie durch elektrisches Heizen oder das Kühlen durch Wärmetauscher.

Dem so behandelten Abgas wird anschließend ein Reduktionsmittel zugeführt. Als Reduktionsmittel können alle dem Fachmann für diesen Zweck in Frage kommende Mittel zur Anwendung kommen. Im Wesentlichen bieten sich hier der Einsatz wässriger Lösungen von Ammoniak, Harnstoff oder Ammoniumcarbamat, Ammoniumnitrat oder sonstige unter den gegebenen Bedingungen Ammoniak freisetzende Stoffe an. Diese können aus einem bereitgestellten, dem Fachmann an sich bekannten Reservoir (3a) entnommen und in geeigneter Art und Weise dem Abgasstrom zugefügt werden. Das Zufügen kann über dem Fachmann bekannte Vorrichtungen bewerkstelligt werden. Mittels dieser wird das optimale Verhältnis von $NH_3/NO_2$-$NO_x$ eingestellt (EP1054722), damit eine möglichst vollständige Umsetzung der Stickoxide zu $N_2$ erfolgen kann.

Diese eben angesprochene Umsetzung kann über dem Fachmann bekannten SCR-Katalysatoren (3c) erfolgen. Über diese Katalysatoren werden gezielt Stickoxide unter reduzierenden Bedingungen in ungefährlichen Stickstoff umgewandelt. Geeignete SCR-Katalysatoren und Vorrichtungen werden beispielhaft in der DE10308288, EP385164, US4961917, EP1495804, EP1147801 sowie US7005116 bzw. US6914026 beschrieben. Besonders bevorzugt sind in diesem Zusammenhang Eisen- oder Kupfer-ausgetauschte Zeolithe oder bevorzugt Übergangsmetall-ausgetauschte Zeolithe und/oder Materialien bei denen Übergangsmetalloxide ausgewählt aus der Gruppe bestehend aus Vanadiumpentoxid, Wolframtrioxid und Titandioxid anwesen sind. Dabei wird als im Zeolithen enthaltenes Übergangsmetall bevorzugt eines aus der Gruppe Kupfer, Mangan, Cobalt, Nickel, Silber und Gold oder Kombinationen davon verwendet. Ganz besonders bevorzugt ist Kupfer in diesem Zusammenhang.

Als weitere Alternative kann der SCR-Katalysator Titandioxid, Zirkondioxid, Verbindungen des Zinns, Molybdäns, Niobs, Cers oder Kombinationen dieser Komponenten aufweisen.

Vorteilhaft ist ebenfalls die Ausführungsform, bei der dem SCR-Katalysator (3c) ein wie weiter oben beschriebener $NO_x$-Speicherkatalysator vorgeschaltet ist.

Eine weitere Erfindung, die zur Lösung der angesprochenen Aufgaben führt, liegt in der Angabe einer Abgasreinigungsvorrichtung aufweisend in folgender Reihenfolge vom Verbrennungsprozess aus gesehen:

a) einen oxidativ wirkenden Partikelfilter (1)
b) einen Oxidationskatalysator (2) und
c) eine SCR-Stufe (3) bestehend aus

(3 a) externer Reduktionsmittelquelle
(3b) Dosiervorrichtung
(3c) Reduktionskatalysator (SCR-Katalysator).

Mit einer solchen Vorrichtung kann vorteilhaft das oben angegebene Verfahren durchgeführt werden. Die für das erfindungsgemäße Verfahren beschriebenen Definitionen und Erläuterungen sowie bevorzugten Ausführungsformen gelten hinsichtlich der räumlich-körperlichen Ausgestaltung entsprechend für die erfindungsgemäße Abgasreinigungsvorrichtung.

Die erfindungsgemäße Vorrichtung bzw. das angesprochene Verfahren kann durch dem Fachmann geläufige weitere Reinigungsaggregate wie z.B. dem erfindungsgemäßen System anströmseitig vorgeschaltete Pre-Turbo-Katalysatoren (SAE-Veröffentlichung 2008-01-0768) oder dem erfindungsgemäßen System abströmseitig nachgeschaltete, den $NH_3$-Slip verhindernde Oxidationskatalysatoren (DE 197 34 627 C1) ergänzt werden. Entsprechend nachgeschaltete Oxidationskatalysatoren können wie die oben beschriebenen Oxidationskatalysatoren (2) ausgestaltet sein.

Mit der vorliegenden Erfindung ist es durch relativ einfache Maßnahmen möglich geworden, eine Abgasreinigung zu betreiben, die wesentliche Vorteile verbindet. Durch die Anordnung des Partikelfilters (1) vor den Oxidationskatalysator (2) minimiert sich dessen Einfluss und damit die Störung, die auf das kritische $NO_2/NO_x$-Verhältnis ausgeübt werden kann. Mit diesem Layout muss durch den Oxidationskatalysator (2) nunmehr nicht mehr eine so hohe Exothermie erzeugt werden, dass eine Filterregeneration stattfinden kann, wodurch die thermische Belastung des Oxidationskatalysators herabgesetzt wird. Aus diesem Grund kann die Metallbeladung des Oxidationskatalysators verringert oder verändert werden, was Edelmetallkosten einsparen hilft. Die beim Partikelabbrannt im Partikelfilter (1) ggf. auftretenden Emissionen von CO und HC passieren auf ihrem Weg im erfindungsgemäßen System notwendiger Weise den abströmseitig angeordneten Oxidationskatalysator (2), was nochmals dazu führt, derartige unvollständig verbrannte Abgaskomponenten zu $CO_2$ und $H_2O$ umzusetzen. Ein System mit diesen Vorteilen lässt sich nicht in naheliegender Weise aus dem Stand der Technik ableiten. Umso überraschender ist die Tatsache, dass die beschriebenen Vorteile mit relativ geringen Modifikationen eines solchen Abgasreinigungssystems unter weiter verbesserter Performance der Abgasreinigung erreicht werden.

Beispiele:

Die Erfindung wird nachfolgend in den Figuren 1 bis 3 und einem Ausführungsbeispiel näher beschrieben. Es zeigen:

**Figur 1:** Abhängigkeit des Stickoxid-Umsatzes und der Selektivität der Stickoxid-Reduktion über einem konventionellen Reduktionskatalysator auf der Basis eines Eisen-ausgetauschten Zeolithen vom molaren $NO_2/NO_x$-Verhältnis bei $\alpha = NO_x/NH_3 = 0,9$ und einer Raumgeschwindigkeit von 30.000 L/h;
untersucht wurden Katalysatoren in frisch hergestelltem Zustand an einem Modellgasprüfstand mit einer definierten Modellgaszusammensetzung; die mit ausgefüllten Symbolen und durchgezogenen Linien markierten Kurven zeigen die $NO_x$-Konvertierung, die mit den entsprechenden nicht ausgefüllten Symbolen und gestrichelten Linien dargestellten Kurven zeigen die jeweiligen $N_2O$-Konzentrationen im Abgas nach Katalysator; es bedeuten:

(●) Meßwerte für $NO_2/NO_x = 0,5$;

(▲) / (△) Meßwerte für $NO_2/NO_x = 0 \rightarrow NO_x = NO$ und
(■) / (□) Meßwerte für $NO_2/NO_x = 1 \rightarrow NO_x = NO_2$

**Figur 2:** Zusammenhang zwischen der Abgastemperatur und des an einem konventionellen, Platin-haltigen Oxidationskatalysator eingestellten molaren $NO_2/NO_x$-Verhältnisses, gemessen in einem Komponenten-reduzierten Modellgas mit einem Sauerstoffgehalt von 6 Vol.-%; durchgezogene Linie = berechnete Gleichgewichtslage der Reaktion

$$NO + \tfrac{1}{2}\,O_2 \rightarrow NO_2$$

(0) = gemessenes molares $NO_2/NO_x$-Verhältnis mit $NO_x$ = NO + $NO_2$ über einem konventionellen Pt-basierten Oxidationskatalysator;

**Figur 3:** Abgasreinigungssystem zur Ausführung des erfindungsgemäßen Verfahrens in einer bevorzugten Ausgestaltung; hierin ist:

(1) oxidativ wirkender Partikelfilter
(2) Oxidationskatalysator
(3) SCR-Stufe bestehend aus:
(3a) externe Reduktionsmittelquelle, z.B. Tank für Harnstofflösung
(3b) Dosiervorrichtung, z.B. Einspritzdüse
(3c) Reduktionskatalysator (SCR-Katalysator)

**Beschreibung des Aufbaus und der Vorgehensweise**

Für die Untersuchung wurden zwei Systeme in einem simulierten FTP72-Zyklus an einer Modellgasanlage vermessen und die Effizienz hinsichtlich HC, CO und NO Oxidation ermittelt. Der Aufbau der untersuchten Systeme ist untenstehend beschrieben. Die DOC bzw. DPF Beschichtungstechnologie wurde entsprechend dem Layout ausgewählt, wobei beide Systeme vom Edelmetallkostenaspekt vergleichbar sind. Ebenso sind die eingesetzten Katalysatorvolumina identisch. Die Eingangsgrößen für den Modellgasreaktor (Temperatur, HC-, CO-, NOx-, NO-Konzentration) sind einer für die amerikanische Gesetzgebung Tier2 Bin5 ausgelegten Motorapplikation entnommen. Die Messungen erfolgten ohne nachgeschalteten SCR Katalysator. Für die Ausführung der Erfindung können konventionelle Aggregate zur Abgasreinigung verwendet werden, die zum Zeitpunkt der Erfindung kommerziell erhältlich waren. Für die Untersuchung wurden von Umicore in Serie produzierte Katalysatoren verwendet, welche vorab thermal gealtert (cDPF: 48 Stunden 800 °C; DOC: 48 Stunden 750 °C) waren.

**System Test 1 - cDPF vor DOC vor Urea-SCR - erfindungsgemäß**

Als cDPF (coated Diesel Particulate Filter) wurde in diesem System eine Technologie mit einer Platin-Palladium Beschichtung im Verhältnis 2:1 eingesetzt. Die Edelmetallbeladung lag bei 55 g/ft$^3$. Beim DOC (Diesel Oxidation Catalyst) handelt es sich um einen Oxidationskatalysator mit einem Platin-Palladium Verhältnis von 1:0. Die Edelmetallbeladung lag hier bei 60 g/ft$^3$.

**System Test 2 - DOC vor cDPF vor Urea-SCR - Vergleichsbeispiel**

Beim DOC handelt sich es um einen Oxidationskatalysator mit einem Platin-Palladium Verhältnis von 2:1 und einer Edelmetallbeladung von 110 g/ft$^3$. Die Filterbeschichtung des cDPF besitzt ein Platin zu Palladium Verhältnis von 6:1 bei einer Edelmetallbeladung von 35 g/ft$^3$.

Ergebnisdiskussion:

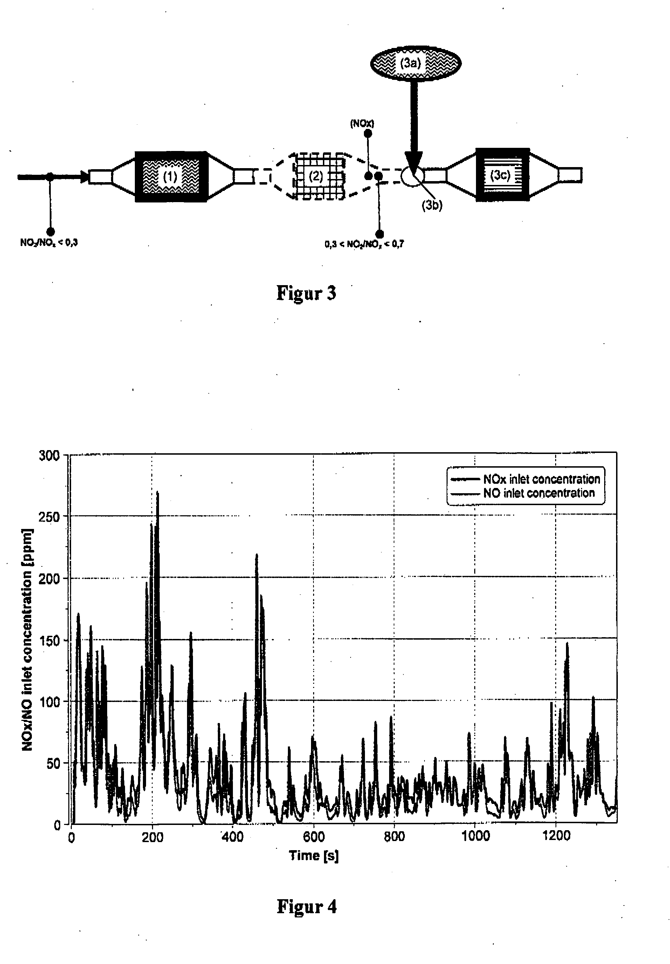

Exemplarisch ist in Figur 4 der Verlauf der $NO_x$ sowie der NO-Eingangskonzentration dargestellt. Durch Differenzbildung der Kurve $NO_x$ und NO kann die Eingangskonzentration (vor Überleiten über ein Reinigungsaggregat - Inlet) an $NO_2$ bestimmt werden. Die auf den Test umgerechnete $NO_2$ Emission ist in Tabelle 1 mit 0,032 g/mi angegeben und entspricht etwa einem Anteil von 16 % der eingehenden $NO_x$ Emission.

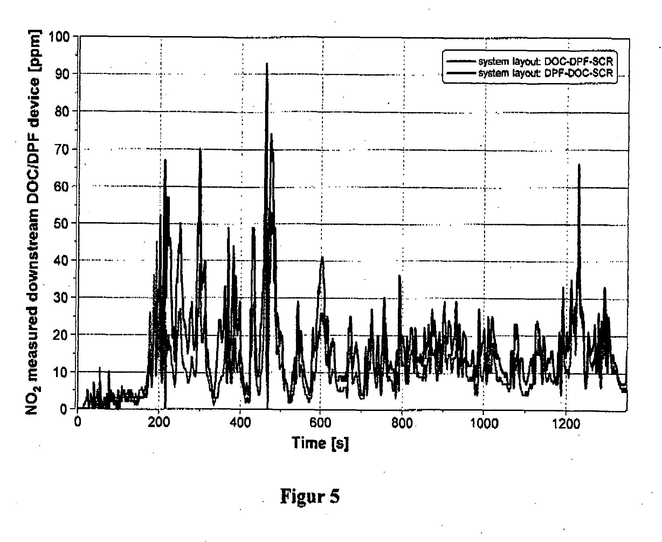

Figur 5 zeigt den Verlauf der $NO_2$ Konzentration jeweils nach System Test 1 und System Test 2. Schon diese

Konzentrationsverläufe zeigen höhere $NO_2$ Konzentrationen bei System Test 1.

**Tabelle 1:**

| | HC [g/mi] | CO [g/mi] | $NO_x$ [g/mi] | $NO_2$ [g/mi] | $NO_2/NO_x$ |
|---|---|---|---|---|---|
| Inlet | 0,723 | 4,326 | 0,196 | 0,032 | 0,16 |
| System Test 1 | 0,026 | 0,359 | 0,180 | *0,072* | *0,40* |
| System Test 2 | 0,015 | 0,297 | 0,179 | *0,049* | *0,27* |

Wie der Tabelle zu entnehmen ist, ergibt sich eine wesentliche Verbesserung im $NO_2$-Anteil vor SCR, der auf nahezu 40% des Gesamt-$NO_x$ ansteigt. Im Gegensatz dazu ist der $NO_2$-Gehalt im $NO_x$ beim Test 2 bei sonst gleichen Bedingungen wesentlich geringer. Damit ist eine schlechtere Umsetzung über dem SCR vorprogrammiert (G. Tuenter et al., Ind. Eng. Chem. Prod. Res. Dev. 1986, 25, 633-636). Weiterhin steigt die HC-(3,6% statt 2%) bzw. die CO-Emmission (8,3% statt 6,9%) nur geringfügig an.

**Patentansprüche**

1. Verfahren zur Reinigung von $NO_x$-enthaltenden Abgasen eines Verbrennungsprozesses,
   **dadurch gekennzeichnet, dass**
   man die Abgase mit den folgenden Vorrichtungen in der angegebenen Reihenfol ge behandelt:

   a) mit einem oxidativ wirkenden Partikelfilter (1),
   b) mit einem Oxidationskatalysator (2) und
   c) nach Zufügen einer ausreichenden Menge eines Reduktionsmittels über eine Dosiervorrichtung (3b) aus einer Reduktionsmittelquelle (3a) mit einem SCR-Katalysator (3c).

2. Verfahren nach Anspruch 1,
   **dadurch gekennzeichnet, dass**
   der Verbrennungsprozess in einem Magermotor stattfindet.

3. Verfahren nach Anspruch 1,
   **dadurch gekennzeichnet, dass**
   der Partikelfilter (1) mit einem oxidativ wirkenden Katalysator beschichtet ist.

4. Verfahren nach einem oder mehreren der vorhergehenden Ansprüche,
   **dadurch gekennzeichnet, dass**
   der Partikelfilter (1) bzw. dessen Beschichtung die Metalle Platin, Palladium oder Rhodium oder Mischungen davon aufweist.

5. Verfahren nach Anspruch 4,
   **dadurch gekennzeichnet, dass**
   der Partikelfilter (1) bzw. dessen Beschichtung ein Molverhältnis von Platin zu Palladium zwischen 15 : 1 und 1 : 3 aufweist.

6. Verfahren nach Anspruch 1,
   **dadurch gekennzeichnet, dass**
   der Partikelfilter (1) mit einem Katalysator mit 3-Wege Funktion beschichtet ist.

7. Verfahren nach einem oder mehreren der vorhergehenden Ansprüche,
   **dadurch gekennzeichnet, dass**
   der Oxidationskatalysator (2) bzw. dessen Beschichtung die Metalle Platin, Palladium oder Rhodium oder Mischungen davon aufweist.

8. Verfahren nach Anspruch 7,
   **dadurch gekennzeichnet, dass**
   der Oxidationskatalysator (2) bzw. dessen Beschichtung ein Molverhältnis von Platin zu Palladium zwischen 15 : 1 und 1 : 3 aufweist.

**9.** Verfahren nach Anspruch 1,
**dadurch gekennzeichnet, dass**
der Partikelfilter (1) und/oder der Oxidationskatalysator (2) eine $NO_x$-Speicherfunktion aufweist.

**10.** Verfahren nach Anspruch 9,
**dadurch gekennzeichnet, dass**
der Partikelfilter (1) und/oder der Oxidationskatalysator (2) als $NO_x$-Speicherkomponenten Oxide des Cers, Bariums oder Strontiums oder Mischungen davon enthält.

**11.** Verfahren nach einem oder mehreren der vorhergehenden Ansprüche,
**dadurch gekennzeichnet, dass**
durch die Regelung der Menge an vorhandenem Sauerstoff im Abgas das $NO_2/NO_x$-Molverhältnis vor dem SCR-Katalysator (3c) auf Werte um 0,3 bis 0,7 einstellt wird.

**12.** Verfahren nach einem oder mehreren der vorhergehenden Ansprüche,
**dadurch gekennzeichnet, dass**
der Oxidationskatalysator (2) temperiert wird.

**13.** Abgasreinigungsvorrichtung aufweisend in folgender Reihenfolge vom Verbrennungsprozess aus gesehen:

    a) einen oxidativ wirkenden Partikelfilter (1)
    b) einen Oxidationskatalysator (2) und
    c) eine SCR-Stufe (3) bestehend aus

        (3a) externer Reduktionsmittelquelle
        (3b) Dosiervorrichtung
        (3c) Reduktionskatalysator (SCR-Katalysator).

**14.** Abgasreinigungsvorrichtung nach Anspruch 13,
**dadurch gekennzeichnet, dass**
die Ausgestaltung der Vorrichtung einem oder mehreren der Ansprüche 2 bis 10 entspricht.

**Figur 1**

**Figur 2**

**Figur 3**

**Figur 4**

**Figur 5**

**EUROPÄISCHER RECHERCHENBERICHT**

Nummer der Anmeldung

EP 08 00 7943

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2004/071646 A (DELPHI TECH INC [US]; KUPE JOACHIM [US]; ZIZELMAN JAMES [US]; BOTTI JE) 26. August 2004 (2004-08-26) * Seite 17, Zeile 23 - Zeile 24 * * Seite 22, Zeile 20 - Seite 23, Zeile 14 * * Seite 36, Zeile 12 - Zeile 19; Abbildung 6 * ----- | 1-14 | INV. F01N3/035 F01N3/20 F01N3/08 |
| X | US 2007/277507 A1 (YAN JIYANG [US]) 6. Dezember 2007 (2007-12-06) * Absatz [0050] * * Absatz [0057] * * Abbildungen 1-4 * ----- | 1-3,9, 11-14 | |
| X | WO 2004/061278 A (DAIMLER CHRYSLER AG [DE]; HERTZBERG ANDREAS [DE]; BANDL-KONRAD BRIGITT) 22. Juli 2004 (2004-07-22) * Seite 15, Absatz 2 - Seite 16, Absatz 1; Abbildung 1 * ----- | 1-3,9, 12-14 | |
| A | EP 1 072 764 A (RENAULT [FR]) 31. Januar 2001 (2001-01-31) * Absätze [0040], [0041]; Abbildung * ----- | 1-3,9, 12-14 | RECHERCHIERTE SACHGEBIETE (IPC) F01N |

Der vorliegende Recherchenbericht wurde für alle Patentansprüche erstellt

| Recherchenort | Abschlußdatum der Recherche | Prüfer |
|---|---|---|
| Den Haag | 29. September 2008 | Schmitter, Thierry |

**ANHANG ZUM EUROPÄISCHEN RECHERCHENBERICHT
ÜBER DIE EUROPÄISCHE PATENTANMELDUNG NR.**

EP 08 00 7943

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-09-2008

| Im Recherchenbericht angeführtes Patentdokument | | Datum der Veröffentlichung | Mitglied(er) der Patentfamilie | | Datum der Veröffentlichung |
|---|---|---|---|---|---|
| WO 2004071646 | A | 26-08-2004 | EP | 1594594 A2 | 16-11-2005 |
| US 2007277507 | A1 | 06-12-2007 | WO | 2007141638 A2 | 13-12-2007 |
| WO 2004061278 | A | 22-07-2004 | DE | 10300298 A1 | 15-07-2004 |
| | | | EP | 1579109 A1 | 28-09-2005 |
| | | | JP | 2006512529 T | 13-04-2006 |
| | | | US | 2006153761 A1 | 13-07-2006 |
| | | | US | 2007175208 A1 | 02-08-2007 |
| EP 1072764 | A | 31-01-2001 | FR | 2796986 A1 | 02-02-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007060623
- EP 1054722 A
- EP 1054722 B
- WO 0102083 A
- WO 2006021336 A
- EP 2008000631 W
- EP 1046423 A
- WO 9535152 A
- DE 10308288
- DE 19614540
- DE 19753738
- DE 3940758
- EP 427970 A

- DE 4435073
- EP 0800856 A
- US 6767855 B
- US 6756336 B
- WO 2004076829 A
- EP 385164 A
- US 4961917 A
- EP 1495804 A
- EP 1147801 A
- US 7005116 B
- US 6914026 B
- DE 19734627 C1

**In der Beschreibung aufgeführte Nicht-Patentliteratur**

- **G. Tuenter et al.** *Ind. Eng. Chem. Prod. Res. Dev.,* 1986, vol. 25, 633-636